(19) Europäisches Patentamt
European Patent Office
Office européen des brevets

(11) Veröffentlichungsnummer: **0 310 895 A2**

(12) **EUROPÄISCHE PATENTANMELDUNG**

(21) Anmeldenummer: **88115745.7**

(51) Int. Cl.4: **C08G 65/28 , C08G 18/48**

(22) Anmeldetag: **24.09.88**

(30) Priorität: **06.10.87 DE 3733752**

(43) Veröffentlichungstag der Anmeldung:
**12.04.89 Patentblatt 89/15**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Franke, Joachim, Dr.**
**An der Ruthen 2**
**D-5000 Köln 80(DE)**
Erfinder: **Goyert, Wilhelm, Dr.**
**Haberstrasse 48**
**D-5090 Leverkusen(DE)**
Erfinder: **Kipphardt, Helmut, Dr.**
**Norddeicher Strasse 22**
**D-5000 Köln 60(DE)**

(54) **Polyether und ihre Verwendung als Formtrennmittel für Kunststoffe.**

(57) Verbesserte Formtrennmittel für Kunststoffe sind Polyether, die durch Umsetzung eines substituierten 1,2-Epoxialkans mit einem Polyol erhältlich sind, wobei mehr als ein Mol Epoxialkan pro Mol Polyol umgesetzt wird.

EP 0 310 895 A2

Xerox Copy Centre

## Polyether und ihre Verwendung als Formtrennmittel für Kunststoffe

Die Erfindung betrifft neue Formtrennmittel für Kunstharze bzw. Kunststoffe, insbesondere Polykondensate und Polyadditionsverbindungen, besonders für Polyurethane.

Die erfindungsgemäßen Formtrennmittel wirken gleichzeitig als Gleitmittel bei der Kunststoffherstellung, Gleitmittel für Kunstharze bewirken in der Regel eine Verbesserung des Fließverhaltens der Kunststoffe und verhindern, daß die Kunststoffe an Teilen der Verarbeitungs- und Herstellungsmaschinen stecken bleiben oder haften. Ihnen kommt somit eine wesentliche Bedeutung für die Verbesserung der Verformbarkeit und Verarbeitbarkeit der Kunststoffmassen zu, und sie stellen insbesondere für die Verarbeitung von thermoplastischen Polyurethanen oder Polyurethanharnstoffen einen unverzichtbaren Zusatzstoff dar.

Bei nahezu allen Verfahren ist es erforderlich, zur Vermeidung des Klebens der Formteile an der Formwandung ein Trennmittel zu verwenden. Eine Methode besteht darin, vor dem Einfüllen der Polyurethanzusammensetzung die Formen sorgfältig mit einem dünnen Film des Trennmittels zu versehen. Üblicherweise werden Wachse, Seifen oder Öle verwandt. Diese sogenannten "äußeren" Trennmittel sing gut brauchbar, jedoch müssen sie in einem gesonderten Arbeitsgang aufgetragen werden. In dieser Zeit fällt das Werkzeug in der Produktion aus. Die genaue Dosierung des Trennmittels ist oft schwierig, weil das Trennmittel durch Spritzen oder Streichen aufgetragen wird und bei komplizierten Formen, z.B. bei feinen Gravierungen des Werkzeuges, diese nicht restlos ausfüllt.

Wegen der vorstehend geschilderten Schwierigkeiten, die insbesondere bei Polyurethanen auftreten, während andere Kunststoffe, z.B. Polyolefine selbst ohne Trennmittel mühelos entformbar sind, wurden "innere" Trennmittel entwickelt, die meist aus Fettsäurederivaten bestehen. Die Fettsäurederivate werden in der Polyurethanzusammensetzung zugesetzt und sorgen für eine ordentliche Entformbarkeit des herzustellenden Teiles vom Werkzeug. Die Brauchbarkeit derartiger innerer Trennmittel bei einer automatischen Formteilherstellung ist aber insofern eingeschränkt, als es nach mehrmaligen Zyklen zu Werkzeugverschmutzung kommt und somit eine Unterbrechung des automatischen Prozesses notwendig ist. Derartige "innere" Trennmittel für Polyurethane sind z.B. in der DE-A-23 07 589 oder DE-A-23 19 648 beschrieben.

Als derartige Trennmittel, die dem Stand der Technik entsprechen, sind z.B. natürliche und synthetische Deri vate von Fettsäuren brauchbar. Besonders geeignet sind Amide von $C_8$-$C_{20}$-Monocarbonsäuren, wie Dodecylamid, Decylamid, Oleylamid oder Stearylamid in Mengen von etwa 0,3 bis 5 %. Ebenfalls geeignet sind Diamide aus aliphatischen Monocarbonsäuren mit mehr als 9 C-Atomen und aromatischen oder aliphatischen Diaminen, wie z.B. Phenylen-bis-palmitylamid oder Ethylen-bis-stearylamid. Als weitere Beispiele seien auch Ester von Fettsäuren, vorzugsweise mit mehr als 10 C-Atomen, wie Palmitinsäuremethyl- oder Stearinsäurebutylester sowie Glyceride von Carbonsäuren mit mehr als 8 C-Atomen, genannt. Auch Polyethylenwachse und synthetische Wachse, Montanwachse und deren Abmischungen können Verwendung finden. Vorzugsweise verwendet man als Gleitmittel im erfindungsgemäßen Verfahren 0,3 bis 5 Gew.-% (bezogen auf Polyurethanfeststoff) an Derivaten von Fettsäuren mit mehr als 12 C-Atomen, z.B. Ester oder Amide dieser Fettsäuren. Weiterhin werden als Gleitmittel Metallseifen, z.B. Magnesium-, Calcium-, Zink- und Aluminiumstearate verwendet. Als Nachteil dieser oben erwähnten Trennmittel ist aber ihre mehr oder weniger große Neigung zum Ausschwitzen oder Ausblühen anzusehen.

Die Trennmittel wirken selbstverständlich nur an der Produktoberfläche trennend, an die sie infolge ihrer Unverträglichkeit mit dem Polyurethan mehr oder weniger schnell wandern. Die Trennwirkung wird in der Regel mit dem Trennmittelgehalt erhöht, wobei höhere Konzentrationen zu einem unerwünschten, abwischbaren, bei längerer Lagerung immer stärker werdenden oder wiederkeh renden grauen Schleier an der Produktoberfläche führen können. In vor der Weiterverarbeitung lange gelagertem Polyurethan(polyharnstoff-)granulat kann die Trennmittelkonzentration an der Oberfläche so groß werden, daß das Produkt von einem Extruder nicht gleichmäßig eingezogen wird. Außerdem ist immer gerade dann, wenn eine optimale Trennwirkung erwünscht ist, nämlich im frisch hergestellten Teil, die Trennmittelkonzentration an der Oberfläche am geringsten. So ist die Wirkung eines großen Anteils der zugesetzten Trennmittel nur die unerwünschte optische Oberflächenerscheinung. Außerdem kann bei Verbundwerkstoffen das ausgeblühte Trennmittel den anderen Stoff schädigen.

Der Erfindung lag die Aufgabe zugrunde, verbesserte vor allem nicht ausblühende Formtrennmittel zur Verfügung zu stellen.

Gegenstand der Erfindung sind Polyether, erhältlich durch Umsetzung eines substituierten 1,2-Epoxialkans mit wenigstens einem Alkylsubstituenten, der wenigstens 8 C-Atome aufweist, mit wenigstens einem Polyol der Formel (1)

$R(OH)_x$ (1)

worin
R ein organischer Rest ist und
x eine ganze Zahl, mindestens aber 2 ist
und wobei mehr als 1 Mol Epoxialkan an das Polyol (1) angelagert sind.

In einer bevorzugten Ausführungsform entspricht das Epoxialkan folgender Formel

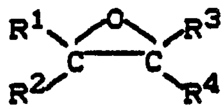
(2)

worin bedeuten
$R^1$ bis $R^4$: unabhängig voneinander H oder ein Alkylrest, wobei wenigstens einer der Substituenten $R^1$ bis $R^4$ ein geradkettiger Alkylrest mit wenigstens 8, insbesondere 8 bis 42 C-Atomen ist.

In einer weiteren bevorzugten Ausführungsform hat wenigstens einer der Substituenten $R^1$ bis $R^4$ wenigstens 10, insbesondere wenigstens 20 C-Atome.

In einer bevorzugten Ausführungsform entspricht der Rest R im Polyol der Formel (1) einem (cyclo)-aliphatischen, aromatischen oder heterocyclischen Rest bzw. einem Alkylaryl- oder Arylalkylrest. Bevorzugte derartige (cyclo)aliphatische Reste haben wenigstens 2, insbesondere 4 bis 12 C-Atome. Bevorzugte aliphatische Reste R sind Ethylen, 1,2 oder 1,3-Propylen; 1,2; 1,3; 1,4; 2,4-Butylen, Pentylen, Hexylen, Cyclohexylen.

Weitere bevorzugte Polyole (1) sind Glyzerin, Trimethylolpropan, Pentaerythrit. Bevorzugte aromatische Reste sind Phenylen, Naphthylen.

Bevorzugte heterocyclische Reste R sind

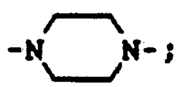

Bevorzugte Alkylaryl- bzw. Arylalkylreste R sind Xylylen;

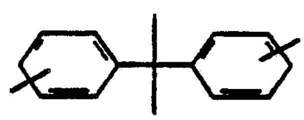 ; 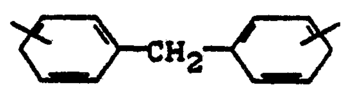

Ganz besonders bevorzugte Polyole der Formel (1) sind Hexandiol, Trimethylolpropan.

Ganz besonders bevorzugte erfindungsgemäß erhältliche Verbindungen entsprechen folgender Formel (3)

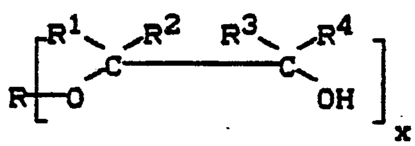
(3)

worin
R und $R^1$-$R^4$ die oben angegebene Bedeutung haben und
x eine ganze Zahl größer als 1 ist, insbesondere 2 bedeuten.

Mögliche weitere Substituenten der Reste R sind weitere Reste, die bei der Umsetzung zwischen dem oben angegebenen Epoxialkan und dem Polyol (1) bei nichtäquimolarer Umsetzung entstehen können, beispielsweise OH oder Reste der Formel

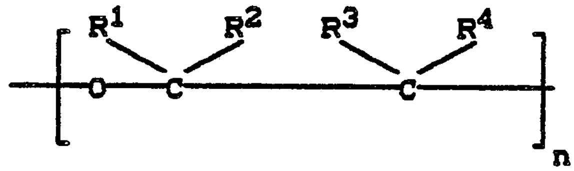

Bevorzugte Epoxialkane sind Decen-1-oxid, Dodecen-1-oxid, Tetradecen-1-oxid, Hexadecen-1-oxid, Heptadecen-1-oxid, Octadecen-1-oxid, Tetracosen-1-oxid, Pentacosen-1-oxid, Hexacosen-1-oxid, Heptacosen-1-oxid, Octacosen-1-oxid, usw..

Diese Epoxide lassen sich beispielsweise synthetisieren, indem man α-Olefine mit 8 bis 42 C-Atomen, die durch Cracken höherer Paraffinwachse oder Oligomerisieren von Ethylen nach herkömmlichen Methoden hergestellt werden können, mit Wasserstoffperoxid oder einer organischen Persäure umsetzt. Die Epoxide können auch durch Chlorhydrinsynthese hergestellt werden.

Diese Methoden zur Synthese der Epoxide sind in der Literatur im Prinzip beschrieben. Vgl. z.B. D. Swern und Mitarbeiter in J. Am. Chem. Soc. 68, 1501 (1946); Chem. Rev. 45, (1949); Org. Reaction, 7, 378 (1953);
H.C. Wohlers und Mitarbeiter in Ind. Eng. Chem., 50, 1685 (1958); Masuo und Kato in Org. Synth. Chem. (Japan), 26, 367 (1968); Takagi und Mitarbeiter in Bulletin Ind. Chem. (Japan), 69, 1080 (1966); 70, 1446 (1967) und Oil Chem. (Japan), 16, 462 (1967).

Besonders bevorzugte Polyole (1) sind Ethylenglykol, Propylenglykol, Butandiol, Pentandiol, Hexandiol, usw.; Glycerin, Trimethylolpropan, usw.; Pentaerythrit.

Die erfindungsgemäßen Polyether werden vorzugsweise hergestellt durch Umsetzung der Epoxide mit den Alkoholen in der Schmelze oder in einem inerten organischen Lösungsmittel bei erhöhter Temperatur zwischen 60 und 200 °C, bevorzugt zwischen 100 und 180 °C unter saurer ode alkalischer Katalyse. Die Reaktion ist beendet, wenn sich analytisch keine Epoxid-Gruppen mehr feststellen lassen. Der Katalysator kann, gegebenenfalls nach Neutralisation, durch Abfiltrieren oder Auswaschen abgetrennt werden. Dies ist aber nur dann notwendig, wenn die Katalysatorreste in dem Polymer unerwünschte Effekte zeigen.

Gegenstand der Erfindung ist weiterhin die Verwendung der erfindungsgemäßen Verbindungen als Formtrenn- oder Gleitmittel für Kunststoffe, insbesondere Polykondensationspolymere, insbesondere Polyadditionspolymere und insbesondere für Polyurethan- oder Polyharnstoffe und ganz besonders für Polyurethan- oder Polyharnstoffelastomere.

Gegenstand der Erfindung ist weiterhin ein Verfahren zur Herstellung von (thermoplastischen) Polyurethan- oder Polyharnstoffelastomere (auch schäumbaren), dadurch gekennzeichnet, daß die Polymeren durch Reaktion von

A) im wesentlichen bifunktionelle, höhermolekulare Verbindungen mit im wesentlichen zwei zerewitinoffaktiven Wasserstoffatomen und einem Molekulargewicht von 400 bis 20 000, vorzugsweise höhermolekularen Polyhydroxylverbindungen,

B) im wesentlichen bifunktionelle Kettenverlängerungsmittel wie Diole oder Diamine mit einem Molekulargewicht von 32 bis 399, vorzugsweise von 62 bis 200 und

C) organischen Diisocyanaten, vorzugsweise aromatischen Diisocyanaten, insbesondere Diphenylmethan-4,4′-diisocyanat, mit bis zu 5 % vorzugsweise bis zu 3 % Diphenylmethan-2,4′-diisocyanat wobei das Molverhältnis des Diisocyanates C zu dem Diolen A und B von 0,9 bis 1,2, vorzugsweise von 0,9 bis 1,1 beträgt,

D) unter Zusatz von 0,05 % bis 5 % der erfindungsgemäßen, einbaubaren Trennmittel, vorzugsweise 0,1 % bis 2 %,

E) unter Zusatz von gegebenenfalls Stabilisatoren und anderen, an sich bekannten Zusatzstoffen, gebildet werden.

Als Ausgangskomponenten für die Herstellung der Polyurethane und als Verfahren und als Apparaturen werden die im Prinzip bekannten Stoffe und Hilfsmittel eingesetzt, wie sie dem Fachmann bekannt sind.

So kommen als A) im wesentlichen lineare, höhermolekulare Verbindungen mit im wesentlichen zwei zerewitinoffaktiven Wasserstoffatomen praktisch alle an sich bekannten, etwa zwei reaktive Gruppen wie Hydroxyl-, primäre und/oder sekundäre Amino-, SH-, Carboxyl-und/oder andere reaktive Gruppen, z.B. Hydrazidgruppen, in Betracht. Es sind dies etwa bifunktionelle Hydroxypolyester, Hydroxypolylactone, Hydroxypolyether, Hydroxypolythioether, Hydroxypolyesteramide, Hydroxypolycarbonate, Hydroxyacetale oder Vinylpolymere mit Hydroxygruppen oder anderen Endgruppen oder bereits Urethan- und/oder Harnstoffgruppen enthaltende Verbindungen. Diese Verbindungen entsprechen dem Stand der Technik und werden z.B. in den deutschen Offenlegungsschriften 23 02 564, 24 23 764, 25 49 372 (US-PS 3 963 679),

DE-OS 24 02 840 (US-PS 3 984 607), DE-AS 24 57 387 (US-PS 4 035 213) und in der DE-OS 2 854 384 und 2 920 501 eingehend beschrieben.

Bevorzugt sind dies hydroxylgruppenhaltige, höhermolekulare Verbindungen, z.B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten. Ferner sind geeignet Hydroxypolycarbonate, Hydroxypolycaprolactone oder auch Hydroxypolyetherdiole auf Basis Ethylenoxid, Propylenoxid, Tetrahydrofuran oder Mischpolyester aus Propylenoxid und/oder Ethylenoxid und/oder Tetrahydrofuran.

Gegebenenfalls können auch höhermolekulare Polyaminoverbindungen, vorzugsweise mit primären aromatischen Aminogruppen eingesetzt werden. Bevorzugte Vertreter werden beispielsweise durch Hydrolyse von entsprechenden NCO-Prepolymeren auf der Basis von höhermolekularen Polyhydroxyverbindungen und überschüssigen aromatischen Diisocyanaten durch (vorzugsweise basische) Hydrolyse hergestellt. Beispiele für diese Verfahren werden in der DE-OS 2 948 419, DE-OS 3 039 600, DE-OS 3 112 118, EP-A-61 627, EP-A-71 132 und EP-A-97 869 angegeben. In der erstgenannten Patentschrift werden auch weitere Verfahren des Standes der Technik zur Herstellung von aromatischen Aminoverbindungen höhermolekularer Struktur, sogenannter Aminopolyether, genannt, wie sie für das erfindungsgemäße Verfahren geeignet sind. Weitere Herstellungsverfahren werden in der DE-AS 1 694 152, FR-PS 1 415 317 oder DE-AS 1 155 907 beschrieben.

Besonders bevorzugt werden als Polyole A) Adipinsäurepolyester oder Caprolactondiole oder Polycarbonatdiole, gegebenenfalls in Mischung mit Polyethern, ganz besonders bevorzugt werden Adipinsäurepolyester mit den Diolen Butandiol-1,4 und/oder Hexandiol-1,6.

Die erfindungsgemäß einzusetzenden Kettenverlängerungsmittel B) sind an sich bekannt und z.B. in den DE-OS 23 02 564, 24 23 764, 25 49 372, 24 02 840, 24 57 378 und 28 54 384 beschrieben. Es sind dies insbesondere niedermolekulare Polyalkohole, vorzugsweise Diole, Diamine, insbesondere (cyclo)-aromatische Diamine. Als Diamine seien 4,4′-Diamino-dicyclohexylmethan, Isophorondiamin, Ethylendiamin und 1,3- oder 1,4-Diaminocyclohexan genannt. Bevorzugte Kettenverlängerungsmittel sind Diole wie z.B. Ethylenglykol, Hexandiol-1,6 und Hydrochinon-di-ß-hydroxyethylether, sowie besonders bevorzugt Butandiol-1,4, gegebenenfalls in Gemischen mit anderen Diolen, insbesondere Hexandiol-1,6. Das Molekulargewicht der Kettenverlängerer liegt bei 32 bis 399, bevorzugt 62 bis 220.

Ferner können in dem Fachmann bekannter Form monofunktionelle Verbindungen in untergeordneten Anteilen, z.B. von 0,01 bis 3 Gew.-%, bezogen auf PU-Feststoff, als sogenannte Kettenabbrecher mitverwendet werden. Beispiele sind Monoalkohole wie Butanol, 2-Ethylenhexanol, Isobutylalkohol, Octanol-1, Stearylalkohol oder Monoamine wie Anilin, Dibutylamin, N-Methylstearylamin oder Piperidin.

Erfindungsgemäß zu verwendende Diisocyanate C) sind die an sich bekannten aliphatischen, cycloaliphatischen, araliphatischen, aromatischen oder heterocyclischen Diisocyanaten des Standes der Technik. Sie sind in den bei A) und B) beschriebenen Veröffentlichungen ausführlich aufgezählt. Erfindungsgemäß bevorzugte Diisocyanate sind Hexamethylendiisocyanat, Isophorondiisocyanat, Naphthy len-1,5-diisocyanat, Tetramethyl-xylylendiisocyanat, 3,3′-Dimethyl-4,4′-diisocyanatodiphenyl (TODI), 1,4-Diisocyanatobenzol und das entsprechende hydrierte Produkt, Toluylendiisocyanate und insbesondere die Diphenylmethyldiisocyanat-Isomeren und die entsprechend hydrierten Produkte. Besonders bevorzugt ist das 4,4′-Diisocyanatodiphenylmethan oder sein Isomerengemisch mit bis zu 5 Mol-%, vorzugsweise bis 3 Mol-%, des 2,4′-Diisocyanatodiphenylmethans, zumeist begleitet von sehr geringen Mengen des 2,2′-Diisocyanato-diphenylmethan-Isomeren.

Die genannten Diisocyanate können gegebenenfalls zusammen bis etwa 15 Mol-% (bezogen auf Diisocyanat) eines höherfunktionellen Polyisocyanates eingesetzt werden; die Menge des höherfunktionellen Polyisocyanats muß jedoch so begrenzt werden, daß ein noch schmelzbares bzw. thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen bzw. auch von Monoisocyanaten ausgeglichen werden, so daß eine zu weit gehende chemische Vernetzung des Produktes vermieden wird. Beispiele für höherfunktionelle Isocyanate und monofunktionelle Verbindungen sind ebenfalls aus dem oben zitierten Stand der Technik zu entnehmen. Beispielsweise seien Monoamine wie Butyl- oder Dibutylamin, Hydroxylamin, Stearylamin, N-Methylstearylamin, Pyrrolidon oder Tetrahexylamin bzw. Butanonoxim, sowie Monoalkohole wie Butanol-1, 2-Ethylhexanol-1, Dodecanol-1, Isobutanol oder tert.-Butanol, Cyclohexanol oder Ethylenglykolmonomethylether erwähnt. Diese Abmischungen gehören nicht zum bevorzugten Bereich.

Bei der Polyurethan-Reaktion können selbstverständlich die üblichen Katalysatoren, Trennmittel, Antistatika, Flammschutzmittel, Füllstoffe, Glasfasern und Einfärbemittel nach dem Stand der Technik (siehe

z.B. DE-OS 28 54 409, DE-OS 29 20 501 und DE-S 33 29 775) zugegeben werden (als Komponente E)).

Als Katalysatoren können z.B. tertiäre Amine, organische Metallverbindungen, insbesondere organische Zinn-, Blei-und Titanverbindungen eingesetzt werden, z.B. Zinn-II-acetat, Zinn-II-ethylhexoat, Dibutylzinndilaurat oder Bleiacetat.

Die Mengen an Reaktionskomponenten A) bis C) für die Polyurethane werden im erfindungsgemäßen Verfahren in der Regel so gewählt, daß das NCO/OH-Äquivalentverhältnis von Isocyanat zu OH-Verbindungen zwischen 0,9 und 1,2, bevorzugt 0,96 und 1,04 liegt.

Die erfindungsgemäßen Verbindungen weisen überlegene Formtrenneigenschaften auf. Sie beeinträchtigen die Eigenschaften der Kunststoffe in die sie inkooperiert werden, nicht, insbesondere nicht durch Phasentrennung oder sonstige Unverträglichkeit und zeigen deutlich verbesserte Eigenschaften gegenüber der aus der DE-A-21 65 749 bekannten Verbindungen (siehe Beispiele), die durch Anlagerung von nur einem Epoxid hergestellt werden. Sie unterscheiden sich von den aus DE-A-31 17 839, 31 17 840, 31 17 841 und 32 10 283 bekannten Verbindungen dadurch, daß letztere in Gegenwart von Ethylenoxid, Propylenoxid, Butylenoxid und/oder Tetrahydrofuran copolymerisiert werden müssen und als Öle vorliegen. Im Unterschied dazu handelt es sich bei den erfindungsgemäßen Verbindungen vorzugsweise um Feststoffe mit einem Schmelzpunkt >30° C. Zudem besitzen diese Öle einen erheblich höheren Polymerisationsgrad und damit verbunden eine längere Kette zwischen den endständigen OH-Atomen.

Überraschend ist, daß die erfindungsgemäßen hydroxyfunktionellen Poylether als Formtrennmittel wirken, obwohl sie über die OH-Gruppen in das Polymer eingebaut werden. Dies ist vor allem überraschend, da bisherige "einbaubare Trennmittel" (z.B. DE 3 436 163) in der Trennwirkung stark abfallen.

## Beispiele

### Beispiel 1 Umsetzung der Epoxide mit Diol bzw. Triol

Die Alkohole und Epoxide werden aufgeschmolzen. Bei 110° C wird ca. 0,5 g Na zugegeben und die Mischung 10 bis 12 Stunden bei 120 bis 190° C unter $N_2$ gerührt, bis alle Epoxid-Gruppen abreagiert sind. Anschließend wird bei 60° C mit der äquivalenten Menge 1 N HCl neutralisiert und das Wasser im Vakuum abgezogen. Das Produkt wird vom Kochsalz bei 60 bis 80° C durch Filtration befreit.

Anstelle des elementaren Natriums kann auch die äquivalente Menge an Natriummethylat oder Natriumhydroxid eingesetzt werden. Vor der Zugabe des Epoxids muß in diesem Falle aber das Methanol bzw. $H_2O$ abgezogen werden.

Anstelle der Salzsäure kann auch die äquivalente Menge verdünnte Schwefelsäure verwendet werden.

Anstelle der Filtration kann das Produkt auch von dem entstehenden Salz durch Lösen des Produkts in Xylol oder Toluol und mehrmaligem Waschen mit Wasser bei 20 bis 80° C, anschließender Phasentrennung und am Ende durch Abziehen des Lösungsmittels befreit werden.

Man erhält ein weißes oder leicht gelbliches, wachsartiges Produkt.

Die einzelnen Produkte ergeben sich aus folgender Tabelle.

Tabelle I

| Nr. | Alkohol | g | | g | OH-Zahl |
|---|---|---|---|---|---|
| 1[1] | Hexandiol | 118 | Octadecen-1-oxid | 268 | 295 |
| 2 | Hexandiol | 118 | Dodecen-1-oxid | 368 | 253 |
| 3 | Hexandiol | 118 | Hexadecen-1-oxid | 480 | 199 |
| 4 | Hexandiol | 118 | Octadecen-1-oxid | 536 | 175 |
| 5 | Hexandiol | 118 | $C_{24}$-$C_{28}$-Epoxid[2] | 844 | 112 |
| 6 | TMP[3] | 134 | Dodecen-1-oxid | 920 | 142 |
| 7 | TMP | 134 | Hexadecen-1-oxid | 720 | 201 |
| 8 | TMP | 134 | Octadecen-1-oxid | 804 | 191 |
| 9 | TMP | 134 | $C_{24}$-$C_{28}$-Epoxid[2] | 1266 | 107 |

[1] Vergleichsversuch zu Patent DE 21 65 749 (äquimolarer Umsatz)
[2] Gemisch von Tetracosen-1-oxid bis Octacosen-1-oxid
[3] TMP = Trimethylolpropan

Beispiel 2 Allgemeine Vorschriften zur Synthese von Polyurethanen

auf Basis

a) eines Polyesterpolyols

1000 g eines vorher entwässerten (1 h bei 120 °C im Vakuum) Butandiolpolyadipates (OH-Zahl 55, mittleres Molekulargewicht 2000) werden mit 120 g Butandiol-1,4 versetzt und auf 120 °C erwärmt. In diese Mischung rührt man eine 60 °C warme Schmelze aus 455,8 g 4,4-Diisocyanato-diphenylmethan (MDI) ein (NCO/OH = 1,00); Die Umsetzungstemperatur steigt auf 170 °C. Man gießt nach 10 bis 30 sec das Reaktionsgemisch in eine mit Teflon ausgekleidete Blechform aus, entformt (5 bis 10 Min.) und tempert anschließend das Material 30 Min. bei 110 °C. Die Formkörper werden nach dem Erkalten mittels einer Schneidemühle granuliert und nach 2 Tagen auf Spritzguß- und Extrusionsmaschinen verarbeitet.

b) eines Polycarbonates

Im Vakuum bei 120 °C (1 h) entwässerter Polypropylenglykolether vom Molekulargewicht 1900 (500 g, OH-Zahl 59) wird 2 h bei 100 °C mit 489,5 g 4,4′-Diisocyanatodiphenylmethan (MDI) unter Rühren umgesetzt. In diese Mischung werden 500 g Hexandiolpolycarbonatdiol (Molekulargewicht 2000, OH-Zahl 56,5, Temperatur 100 °C) und dann 130 g Butandiol-1,4 (Raumtemperatur) unter Rühren eingebracht (NCO/OH = 1,00). Die Reaktionstemperatur steigt hierbei auf 170 °C. Nach 10 bis 30 sec gießt man das Reaktionsgemisch in eine mit Teflon ausgekleidete Blechform aus, entformt (5 bis 10 Min.) und tempert anschließend das Material 30 Min. bei 110 °C. Die Formkörper werden nach dem Erkalten mittels einer Schneidemühle granuliert und nach 2 Tagen auf Spritzguß- und Extrusionsmaschinen verarbeitet.

c) eines Polyetherpolyols

Die Mischung aus 2000 g eines entwässerten Polybutandioladipats mit einem Durchschnittsmolekulargewicht 2000 (OH-Zahl 56), 160,3 Gew.-Teilen Butandiol-(1,4) wird schnell auf 190 °C erhitzt. In dieser Schmelze werden 53,4 Gew.-Teile 4,4′-Diaminodiphenylmethan gelöst. Anschließend werden 770 Gew.-Teile auf 60 °C erwärmtes 4,4′-Diisocyanatodiphenylmethan zugegeben, mit einem Intensivrührer homogenisiert, in eine Teflonschale gegossen und ca. 1 Stunde auf 110 °C gehalten. Das abgekühlte Produkt wird in einer Schneidmühle zerkleinert.

Einarbeitung der Trennmittel (vgl. Tabelle II-IV)

Polyesterpolyurethan

Man legt 1000 g eines wie oben beschrieben entwässerten Butandiolpolyadipates (OH-Zahl 55, mittleres Molekulargewicht 1900) vor, gibt das Trennmittel hinzu und verfährt in gleicher Weise wie unter 2a) angegeben.

Polyethercarbonatpolyurethan

500 g eines wie unter 2b) beschriebenen vorbehandelten Polypropylenglykolethers (OH-Zahl 59, mittleres Molekulargewicht 2000) werden mit dem Trennmittel versetzt und 2 h bei 100 °C mit 489,5 g 4,4′-Diisocyanatodiphenylmethan (MDI) unter Rühren erhitzt. Der weitere Handlungsablauf folgt der unter 2b) beschriebenen allgemeinen Vorschrift.

Polyetherpolyurethan

2000 Gew.-Teile eines wie unter 2c) beschriebenen Polybutylenadipates und 160,3 Gew.-Teile Butandiol-(1,4) werden mit dem Trennmittel versetzt und man verfährt in gleicher Weise wie unter 2c) angegeben.

Ausprüfung

a) Trennwirkung

Beurteilt wird die Trennwirkung an der Platte beim Entformen an der Spritzgußmaschine.

b) Migration

Dazu werden Spritzgußplatten visuell begutachtet, das Ausblühverhalten wird bei Raumtemperatur RT (nach 6 und 12 Wochen) und bei 60 °C und 80 °C (jeweils nach 100 h Verweilzeit) beurteilt.

c) Klebrigkeit

Zudem wird die Klebrigkeit beim Entrollen eines unter Spannung aufgewickelten extrudierten Bandes (Breite 1 cm, Dicke 2 mm) getestet. Die Prüfung erfolgt nach jeweils 100 h bei Raumtemperatur und 60 °C.

Tabelle II

| Polyesterpolyurethane | | | | | | | | |
|---|---|---|---|---|---|---|---|---|
| Additiv | | Trennwirkung | Klebrigkeit (Band) | | Migration | | | |
| (g/1000 g Polyol) | | (Platte) | RT | 60° C | RT(6 Wo) | RT(12 Wo) | 60° C(100 h) | 80° C(100 h) |
| Produkt Nr. 5 | (5) | 1 | 1 | 2 | 0 | 0 | 1 | 1 |
| Produkt Nr. 5 | (10) | 1 | 1 | 2 | 0 | 0 | 1 | 1 |
| Produkt Nr. 1 | (5) | 2 | 3 | - | 4 | - | - | - |
| Produkt Nr. 2 | (5) | 2-3 | - | - | 3 | - | - | - |
| Produkt Nr. 9 | (5) | 1-2 | - | - | 1 | - | - | - |
| Bisstearylamid des Ethylendiamins | (3) | 2-3 | 2 | 4 | 0 | 1 | 1 | 5 |
| " | (6) | 2-3 | 2 | 4 | 0 | 1 | 1 | 5 |
| Ethylenglykolbismontansäureester | (3) | 2-3 | 2-3 | 2-3 | 1 | 3 | 1 | 3 |
| " | (6,5) | 2-3 | 2-3 | 4 | 3 | 3 | 3 | 3 |
| | | Notenskala | | | Notenskala | | | |
| | | 1 = sehr gute Trennwirkung | | | 0 = kein Ausblühen | | | |
| | | 2 = gute Trennwirkung | | | 1 = schwaches Ausblühen | | | |
| | | 3 = leichtes Kleben | | | 2 = mittleres Ausblühen | | | |
| | | 4 = mittleres Kleben | | | 3 = starkes Ausblühen | | | |
| | | 5 = starkes Kleben | | | | | | |

Vergleichsversuch nach DE 21 65 749
DE-AS 1 768 283
DE-PS 558 437

Tabelle III

| Polyethercarbonate | | | | | | | | |
|---|---|---|---|---|---|---|---|---|
| Additiv | | Trennwirkung | Klebrigkeit (Band) | | Migration | | | |
| (g/1000 g Polyol) | | (Platte) | RT | 60° C | RT(6 Wo) | RT(12 Wo) | 60° C(100 h) | 80° C(100 h) |
| Produkt Nr. 5 | (15) | 1 | 2 | 2-3 | 0 | 1 | 1 | 3 |
| Produkt Nr. 5 | (30) | 1 | 2 | 2-3 | 0 | 1 | 1 | 3 |
| Bisstearylamid des Ethylendiamins | (7) | 2-3 | 3 | 4 | 0 | 1 | 3 | 5 |
| Ethylenglykolbismontansäureester | (15) | 2-3 | 3 | 4 | 0 | 1 | 3 | 5 |
| " | (30) | 2-3 | 2-3 | 4 | 0 | 1 | 3 | 5 |
| | | Notenskala | | | Notenskala | | | |
| | | 1 = sehr gute Trennwirkung | | | 0 = kein Ausblühen | | | |
| | | 2 = gute Trennwirkung | | | 1 = schwaches Ausblühen | | | |
| | | 3 = leichtes Kleben | | | 2 = mittleres Ausblühen | | | |
| | | 4 = mittleres Kleben | | | 3 = starkes Ausblühen | | | |
| | | 5 = starkes Kleben | | | | | | |

DE-AS 1 768 283
DE-PS 558 437

Tabelle IV

| Polyetherpolyurethan | | | | | |
|---|---|---|---|---|---|
| Additiv | | Trennwirkung | Migration | | |
| (g/1000 g Polyol) | | (Platte) | RT (1 Woche) | 60° C (1 Woche) | 80° C (1 Woche) |
| Bisstearylamid des Ethylendiamins | (3,7)[2] | 2-3 | 1 | 3 | 3 |
| Produkt Nr. 5 | (3,7) | 1 | 0 | 0 | 0 |
| " | (7,5) | 1 | 0 | 0 | 0 |
| Notenskala | | | Notenskala | | |
| 1 = sehr gute Trennwirkung | | | 0 = kein Ausblühen | | |
| 2 = gute Trennwirkung | | | 1 = schwaches Ausblühen | | |
| 3 = leichtes Kleben | | | 2 = mittleres Ausblühen | | |
| 4 = mittleres Kleben | | | 3 = starkes Ausblühen | | |
| 5 = starkes Kleben | | | | | |

[2] Vergleichsversuch nach DE-AS 1 768 283
[3] DE-PS 558 437

## Ansprüche

1. Polyether erhältlich durch Umsetzung eines substituierten 1,2-Epoxialkans mit wenigstens einem Alkylsubstituenten, der wenigstens 8 C-Atome aufweist, mit wenigstens einem Polyol der Formel
$R(OH)_x$ (1)

worin
R ein organischer Rest ist und
x eine ganze Zahl, mindestens aber 2 ist
und wobei mehr als 1 Mol Epoxialkan an das Polyol (1) angelagert ist.

2. Polyether nach Anspruch 1, dadurch gekennzeichnet, daß das Epoxialkan folgender Formel entspricht

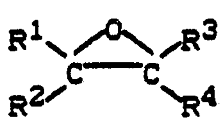 (2)

worin bedeuten
$R^1$ bis $R^4$ unabhängig voneinander Wasserstoff oder einen Alkylrest, wobei wenigstens einer der Substituenten einen vorzugsweise geradkettigen Alkylrest mit 8 bis 42 C-Atomen bedeutet.

3. Polyether nach Anspruch 2, dadurch gekennzeichnet, daß wenigstens einer der Substituenten $R^1$ bis $R^4$ wenigstens jeweils 10 C-Atome aufweisen.

4. Polyether gemäß wenigstens einem der vorhergehenden Ansprüche, dadurch gekennzeichnet, daß der Rest R ein (cyclo)aliphatischer, aromatischer oder heterocyclischer Rest ist oder Alkylaryl oder Arylalkyl.

5. Polyether nach Anspruch 1, dadurch gekennzeichnet, daß das Polyol der Formel (1) Hexandiol oder Trimethylpropan ist.

6. Verbindungen der allgemeinen Formel

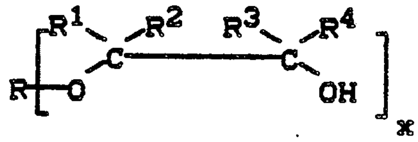

worin
R ein organischer Rest ist,
x eine ganze Zahl größer als 1 ist und
worin R und $R^1$ bis $R^4$ die in Anspruch 1 und 2 angegebene Bedeutung haben.

7. Verwendung der Verbindungen gemäß wenigstens einem der vorhergehenden Ansprüche als Formtrennmittel für Kunststoffe.

8. Verwendung der Verbindungen gemäß wenigstens einem der Ansprüche 1 bis 6 als Formtrennmittel für elastomere Polyurethane und/oder Polyharnstoffe.

9. Verfahren zur Herstellung von Polyurethanen in Gegenwart von Formtrennmitteln, dadurch gekennzeichnet, daß als Formtrennmittels wenigstens ein Polyether gemäß wenigstens einem der Ansprüche 1 bis 6 verwendet wird.

10. Verfahren zur Herstellung von thermoplastischen Polyurethan- oder Polyharnstoffelastomeren, dadurch gekennzeichnet, daß die Polymeren durch Reaktion von
A) im wesentlichen bifunktionellen, höhermolekularen Verbindungen mit im wesentlichen zwei zerewitinoffaktiven Wasserstoffatomen und einem Molekulargewicht von 400 bis 20 000, vorzugsweise höhermolekulare Polyhydroxylverbindungen,
B) im wesentlichen bifunktionellen Kettenverlängerungsmitteln wie Diolen oder Diaminen mit einem Molekulargewicht von 32 bis 399, vorzugsweise von 62 bis 220 und
C) organischen Diisocyanaten, vorzugsweise aromatischen Diisocyanaten, insbesondere Diphenylmethan-4,4′-diisocyanat, mit bis zu 5 % vorzugsweise bis zu 3 % Diphenylmethan-2,4′-diisocyanat
wobei das Molverhältnis des Diisocyanates C zu den Diolen A und B 0,9 bis 1,2 beträgt;
D) unter Zusatz der erfindungsgemäßen Anlagerungsprodukte nach Anspruch 1 bis 5 in Mengen zwischen 0,05 und 5 %, bevorzugt 0,1 bis 2 %, bezogen auf die Summe A) + B) + C),
E) unter Zusatz von gegebenenfalls Stabilisatoren und anderen, an sich bekannten Zusatzstoffen
gebildet werden.